(19)

**Europäisches Patentamt**

**European Patent Office**

**Office européen des brevets**

(11) **EP 1 653 694 A2**

(12) **EUROPEAN PATENT APPLICATION**

(43) Date of publication:
**03.05.2006 Bulletin 2006/18**

(51) Int Cl.:
**H04L 27/26** (2006.01)     **H04L 1/00** (2006.01)

(21) Application number: **05023691.8**

(22) Date of filing: **28.10.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **29.10.2004 KR 2004087306**

(71) Applicants:
  • **Samsung Electronics Co., Ltd.**
    **Suwon-si, Gyeonggi-Do (KR)**
  • **Korea Advanced Institute of Science and Technology**
    **(KAIST)**
    **Daejon (KR)**

(72) Inventors:
  • **Ahn, Woo-Geun**
    **Yusong-gu**
    **Daejon (KR)**
  • **Kim, Hyung-Myung**
    **Yusong-gu**
    **Daejon (KR)**
  • **Oh, Hye-Ju**
    **Yusong-gu**
    **Daejon (KR)**

  • **Kang, Tae-Sung**
    **Yusong-gu**
    **Daejon (KR)**
  • **Park, Seung-Young**
    **Yeongtong-gu**
    **Suwon-si**
    **Gyeonggi-do**
    **R.O.K. (KR)**
  • **Lee, Yeon-Woo**
    **Yeongtong-gu**
    **Suwon-si**
    **Gyeonggi-do**
    **R.O.K. (KR)**
  • **Lee, Ok-Seon**
    **Yeongtong-gu**
    **Suwon-si**
    **Gyeonggi-do**
    **R.O.K. (KR)**
  • **Kim, Yung-Soo**
    **Yeongtong-gu**
    **Suwon-si**
    **Gyeonggi-do**
    **R.O.K. (KR)**

(74) Representative: **Grünecker, Kinkeldey,**
    **Stockmair & Schwanhäusser**
    **Anwaltssozietät**
    **Maximilianstrasse 58**
    **80538 München (DE)**

(54) **Method for uplink scheduling in communication system using frequency hopping-orthogonal frequency division multiple access (FH-OFDMA) scheme**

(57)     Disclosed is a method for uplink scheduling in a communication system. The method for uplink scheduling in a communication system having a cellular structure hopping between sub-channels according to a predetermined rule whenever a signal is transmitted The communication system dividing a whole frequency band into a plurality of sub-carrier bands and including the sub-channels which are sets of the sub-carrier bands. The method includes determining a number of sub-channels to be allocated to a mobile station such that throughput of the mobile station is maximized based on a first predetermined condition in which a mobile station having a superior channel state is allocated with a greater number of sub-channels than a mobile station having an inferior channel state, and determining a modulation and coding scheme level according to a signal-to-interference and noise ratio (SINR) of a downlink channel reported by the mobile station based on a second predetermined condition capable of improving a channel state of the mobile station having an inferior channel state.

FIG.1

**Description**

The present invention relates to a communication system, and more particularly to a method for uplink scheduling in a communication system using a frequency hopping-orthogonal frequency division multiple access (FH-OFDMA) scheme.

In the 4th generation (4G) communication system, which is the next generation communication system, research is being pursued to provide users with services having various qualities of services (QoSs) at high speed. In particular (in the current 4G communication system), research is being pursued to develop a new type of communication system ensuring mobility and Quality of Service (QoS) in a Broadband Wireless Access (BWA) communication system such as a wireless Local Area Network (LAN) system and a wireless Metropolitan Area Network (MAN) system.

Accordingly, in the 4th generation mobile communication system, an Orthogonal Frequency Division Multiplexing (OFDM) scheme is being studied as an available scheme for the high-speed transmission of data through a wire/ wireless channel. The OFDM scheme transmits data using multi-carriers and is a multicarrier modulation scheme in which serially input symbols are converted into parallel symbols and modulated into a plurality of sub-carriers (i.e., a plurality of sub-carrier channels) orthogonal to each other to be transmitted.

Orthogonal Frequency Division Multiple Access (OFDMA) scheme is a multiple access scheme which is based on the OFDM scheme. an The OFDMA scheme allocates a sub-carriers to specific mobile stations. The OFDMA scheme does not require a spreading sequence for band spreading. However, since a sub-channel allocated to the specific mobile station is fixed, transmission efficiency is degraded when the allocated sub-channel is under the continuous influence of fading. The sub-channel includes at least one sub-carrier.

Accordingly, a set of sub-carriers (i.e., sub-channels) allocated to a specific mobile station can obtain a frequency diversity gain by dynamically changing according to a padding characteristic on a wireless transmission path. Therefore, it is possible to increase a transmission efficiency as a result of to the obtained frequency diversity gain. Thus, one sub-channel may be made within a band of a total of sub-carriers according to a predetermined rule or randomly in order to obtain the frequency diversity gain. Among those schemes, a frequency hopping scheme is the representative scheme.

In addition, if a channel of a system employing the OFDMA scheme is a quasi-static channel, a state of which is rarely changed, a signal of a mobile station allocated to a frequency band (sub-carrier, or sub-channel) having a low channel gain undergoes continuous fading. Herein, it is assumed that a communication system employs a quasi-static channel and has multi-cells corresponding to a frequency reuse factor of 1.

First, since mobile stations existing in a first predetermined cell from among the multi-cells are allocated different sub-carriers (or different sub-channels), the sub-carriers (or the sub-channels) do not interfere with each other as interference signals. However, since mobile stations belonging to a cell (i.e., a second cell) adjacent to a first cell may use the same frequency band as mobile stations belonging to the first cell, signals transmitted/received to/from mobile stations belonging to the second cell may exert an influence on the mobile stations belonging to the first cell as interference signals. Accordingly, combination of the OFDMA scheme and the frequency hopping (FH) scheme can prevent mobile stations under a quasi-static environment from undergoing continuous fading or receiving interference signals from neighboring cells. Thus, a scheme of combining the OFDMA scheme with the FH scheme is called an FH-OFDMA scheme.

Herein, in a communication system employing the FH-OFDMA scheme, a mobile station divides a total amount of power previously allocated thereto into the number of total sub-carriers allocated to it. Thereafter, the mobile station transmits a signal to a base station according to a power level equally distributed to each sub-carrier. The maximum transmission power level allowed to the mobile station is limited to 23dBm.

Accordingly, a relationship between sub-channels allocated to a mobile station, sub-carriers of a sub-channel for signal transmission and power required for signal transmission must exist. In the description of the present invention, an operation of controlling a base station based on this relationship will be described in view of FH-OFDMA uplink scheduling.

As described above, as the number of sub-carriers allocated to a mobile station decreases, transmission power allocated to each sub-carrier is increased. Therefore, if the number of sub-carriers allocated to the mobile station is reduced, a signal-to-interference-and-noise ratio (SINR) may increase due to increase of transmit power per subcarrier, thereby reducing the probability of occurrence of communication error. However, if the number of sub-carriers allocated to the mobile station is reduced, the overall transmission data rate may be lowered. Accordingly, it is necessary to employ a scheme of reducing communication errors while using all sub-channels allowable in one cell.

In addition, conventionally, it is assumed that all mobile stations belonging to one cell are given with the same number of sub-channels according to an equal channel allocation scheme. In other words, when the total sub-channels is N and when the number of mobile stations belonging to one cell is M, the number of sub-channels which can be allocated to a mobile station is N/M. Accordingly, the mobile stations attempt to obtain the maximum performance by using power and a modulation and coding scheme (MCS) applicable to a sub-channel allocated thereto. However, a mobile station positioned at a cell border may interfere with a neighboring cell. In this case, the power level of the mobile station is lowered due to the interference of the neighboring cell. Therefore, the mobile station may have degraded signal transmission performance as compared with a case in which a lower number of sub-channels is allocated to the mobile station so that the mobile station allocates greater power to a smaller number of sub-carriers.

Accordingly, the present invention has been made to solve the above-mentioned problems occurring in the prior art.

It is the object of the present invention to provide a method for efficiently determining the number of sub-channels allocated to a mobile station in a communication system.

This object is solved by the subject matter of the independent claims.

Preferred embodiments are defined in the dependent claims.

An aspect of the present invention is to provide a method for efficiently controlling power according to the number of sub-channels allocated to a mobile station in a communication system.

To accomplish the above, there is provided a method for uplink scheduling in a communication system having a cellular structure hopping between sub-channels according to a predetermined rule whenever a signal is transmitted, the communication system dividing a whole frequency band into a plurality of sub-carrier bands and including the sub-channels which are sets of the sub-carrier bands, the method including determining a number of sub-channels to be allocated to a mobile station such that throughput of the mobile station is maximized based on a first condition in which a mobile station having a superior channel state is allocated with more sub-channels than a mobile station having an inferior channel state, and determining a modulation and coding scheme level according to a signal-to-interference and noise ratio (SINR) of a downlink channel reported by the mobile station based on a second condition capable of improving a channel state of the mobile station having an inferior channel state.

According to another aspect of the present invention, there is provided a method for uplink scheduling in a communication system having a cellular structure hopping between sub-channels according to a predetermined rule whenever a signal is transmitted, the communication system dividing a whole frequency band into a plurality of sub-carrier bands and including the sub-channels which are sets of the sub-carrier bands, the method including estimating an amount of signal interference exerted on the mobile station located in a predetermined cell by neighboring cells, estimating an average amount of signal interference by dividing a total amount of signal interference of all mobile stations existing in the predetermined cell by the number of the neighboring cells, adding a first offset value to the amount of signal interference exerted on the mobile station by the neighboring cells, and averaging signal-to-interference and noise ratio (SINR) values of overall cells such that the estimated average signal-to-interference and noise ratio (SINR) value approximates the estimated amount of signal interference, and determining transmission power of the mobile station corresponding to the estimated average signal-to-interference and noise ratio (SINR) value.

According to still another aspect of the present invention, there is provided a method for uplink scheduling in a communication system having a cellular structure hopping between sub-channels according to a predetermined rule whenever a signal is transmitted, the communication system dividing a whole frequency band into a plurality of sub-carrier bands and including the sub-channels which are sets of the sub-carrier bands, the method including estimating an amount of signal interference exerted on the mobile station existing in a predetermined cell by neighboring cells, estimating an average amount of signal interference by dividing a total amount of signal interference of all mobile stations existing in the predetermined cell by the number of the neighboring cells, adding a first offset value to the amount of signal interference exerted on the mobile station by the neighboring cells, and averaging signal-to-interference and noise ratio (SINR) values of overall cells such that the averaged signal-to-interference-and-noise-ratio (SINR) value approximates the estimated average amount of signal interference, determining transmission power of the mobile station corresponding to the averaged signal-to-interference and noise ratio (SINR) value, determining a number of sub-channels to be allocated to a mobile station such that throughput of the mobile station is maximized based on a condition in which a mobile station having a superior channel state is allocated with more sub-channels than a mobile station having an inferior channel state according to the determined transmit power of the mobile station, and determining a modulation and coding scheme level according to a signal-to-interference and noise ratio (SINR) of the mobile station based on a condition capable of improving a channel state of the mobile station having an inferior channel state.

The present invention will be more apparent from the following detailed description taken in conjunction with the accompanying drawings, in which:

FIG 1 is a block diagram illustrating a cellular structure applicable to the present invention;
FIG. 2 is a flowchart illustrating a procedure of determining the number of sub-channels and the MCS level according to a first embodiment of the present invention;
FIG. 3 is a flowchart illustrating a distributed power control procedure according to a second embodiment of the present invention;
FIG. 4 is a flowchart illustrating a procedure of integrating a scheme for allocating sub-channels with a scheme for controlling power according to a third embodiment of the present invention; and
FIG. 5 is a graph illustrating a simulation result according to the embodiments of the present invention.

Hereinafter, preferred embodiments of the present invention will be described in detail with reference to the accompanying drawings. Note that the same or similar components in drawings are designated by the same reference numerals as far as possible although they are shown in different drawings. In the following description of the present invention, a detailed description of known functions and configurations incorporated herein will be omitted when it may make the subject matter of the present invention unclear.

The present invention proposes a method for uplink scheduling in a communication system employing a frequency hopping-orthogonal frequency division multiple access (FH-OFDMA) scheme. In particular, according to the present invention, the optimum number of sub-channels to be allocated to a mobile station is determined, and a Modulation and Coding Scheme (MCS) level according to the determination of the optimum number of sub-channels is determined in order to correct communication errors and increase cell capacity in the FH-OFDMA communication system. In addition, the present invention relates to a method for uplink scheduling which efficiently determines transmission power of the mobile station according to the determined number of sub channels.

In other words, the present invention includes a scheme for determining by a base station the number of sub-channels to be allocated to a mobile station and determining an MCS level according to the determined number of sub-channels, a scheme for efficiently controlling power, a scheme for allocating sub-channels, and a scheme obtained by integrating the scheme for allocating sub-channels with the scheme for efficiently controlling power. Herein, the sub-channel allocation and the power control are determined through scheduling of the base station, and the above two schemes belong to the same category of the base station scheduling.

Hereinafter, three embodiments of the present invention will be described. These embodiments respectively correspond to a sub-channel allocation scheme, an effective power control scheme, and an Integration scheme for the first and second embodiments.

### Embodiment 1: The Sub-Channel Allocation Scheme

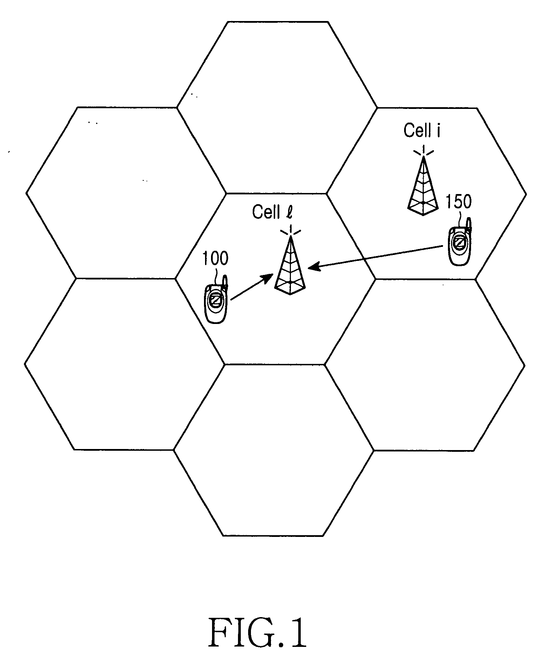

FIG. 1 is a view illustrating a cellular structure applicable to the present invention. It is assumed that the number of the total sub-channels is N, and M mobile stations belong to each cell in the cellular structure having a frequency reuse factor of 1. The mobile stations use sub-channels to transmit/receive data in every frame according to a predetermined hopping rule. All of the mobile stations transmit using a transmission power which is less than or equal to a preset maximum transmission power ($P_{max}$). Herein, it is assumed that the sub-channels allocated to each mobile station have uniformly distributed power. A signal of a mobile station 150 positioned at the $l^{th}$ cell acts as an interference signal of a neighboring cell (i.e., $l^{th}$ cell).

The system with $N_c$ equal-size hexagonal cells is considered. The number of sub-channels which can be used by a mobile station m in the $l^{th}$ cell is $N_{i,m}(\sum_{m-1}^{M} N_{i,m} \leq N_{max})$. Herein, the $N_{max}$ denotes the number of the total sub-channels. A link gain among the $l^{th}$ base station and the $m^{th}$ mobile station of the $l^{th}$ cell is denoted by $G_{l,i,m}$. In addition, a signal-to-interference and noise ratio (SINR) of a $k^{th}$ mobile station in the $l^{th}$ cell may be represented as shown in Equation 1 below.

$$\underline{\text{Equation 1}}$$

$$SINR_{l,k} \cong \frac{\frac{1}{n_{l,k}}\sum_{j=1}^{N}\rho_{l,k,j}G_{l,l,k}P_{l,j}}{\frac{1}{N}\sum_{i \neq l}^{N_c}\sum_{m=1}^{M}\sum_{j=1}^{N}\rho_{i,m,j}G_{l,i,m}P_{i,j} + \sigma^2} \cong \frac{W_{l,l,k}/n_{l,k}}{\sum_{i \neq l}^{N_c}\sum_{m=1}^{M}W_{l,i,m}\Big/N}$$

$$,where \quad W_{l,i,m} \equiv \sum_{j=1}^{N}\rho_{i,m,j}G_{l,i,m}P_{i,j}$$

$$= G_{l,i,m}PT_{i,m}$$

Herein, the $W_{l,i,m}$ indicates the power of a signal received in the $l^{th}$ base station from the $m^{th}$ mobile station of the $l^{th}$ cell. The $\rho_{i,m,j}$ denotes an indicator representing if the $m^{th}$ mobile station uses the $j^{th}$ sub-carrier in the $l^{th}$ base station. For example, if the m$^{th}$ mobile station uses the $j^{th}$ sub-carrier, the value of the indicator may be "1". Otherwise, the value of the indicator may be "0". $PT_{i,m}$ is the total transmission power of the $m^{th}$ mobile station of the $l^{th}$ cell.

In other words, according to the present invention, the number of sub-channels and an MCS level are determined according to a link gain between a mobile station and a base station. That is, according to the above link gain, the number of sub-channels allocated to a mobile station having a superior channel state may increase and the number of the sub-channels allocated to a mobile station having an inferior channel state may decrease. Under this premise, each mobile station uses in order to determines the optimum number of sub-channels and the optimum MCS level for the maximum throughput using Equation 2 shown below.

### Equation 2

$$\{t_{i,m}^*, N_{i,m}^*\} = \arg \max_{\substack{0 < N_{i,m} \le N_{\max} \\ t_{i,m} \in \{1,...C\}}} \sum_{m=1}^{M} N_{i,m} b(SINR_{i,m})$$

$$s.t. \ 0 \le P_{i,m} = \frac{\gamma(t_{i,m})I_i N_{i,m}}{G_{i,i,m}} \le P_{\max} \ for\, all\, m \in cell\, i \ \ and \ \sum_{m=1}^{M} N_{i,m} \le N_{\max} \ for\, all\, cell\, i$$

Herein, the $G_{i,i,m}$ is a link gain between the $m^{th}$ mobile station of the $l^{th}$ cell and its base station. Equation 2 determines the optimum number of sub-channels $N_{i,m}^*$ and the optimum MCS level $t_{i,m}^*$ such that M mobile stations of the ith cell can obtain the maximum throughput. Herein, the $SINR_{i,m}$ denotes SINR value of the $m^{th}$ mobile station of the $l^{th}$ cell, the $b(SINR_{i,m})$ denotes the number of bits per symbol corresponding to the $SINR_{i,m}$ and the $y(t_{i,m})$ denotes an SINR threshold used for obtaining the MCS level $t_{i,m}^*$. On the assumption that the maximum available transmission power and the maximum number of available sub-channels are preset in the system, each mobile station can easily determine the number of its sub-channels and its MCS level maximizing the throughput thereof using Equation 3 as shown below.

### Equation 3

$$\{t_{i,m}^*, N_{i,m}^*\} = \arg \max_{N_{i,m}, t_{i,m}} N_{i,m} b(SINR_{i,m}) \ s.t. \ P_{i,m} = \frac{\gamma(t_{i,m})I_i N_{i,m}}{G_{i,i,m}} \le P_{\max}$$

In Equation 3, the $m^{th}$ mobile station can determine the optimum number of sub-channels $N_{i,m}^*$ and the optimum MCS level $t_{i,m}^*$ based on the fact that the throughput thereof is proportional to the number of allocated sub-channels, and the throughput is degraded if the number of the allocated sub-channels exceeds the specific number of sub-channels. In other words, the $m^{th}$ mobile station can determine the $N_{i,m}^*$ and the $t_{i,m}^*$ capable of obtaining the maximum throughput within the maximum power value available in a system or in a cell. Herein, a link gain of the mobile station is determined through periodic ranging, and an amount of interference given to each sub-channel of each mobile station is an averaged value for sub-carriers of the whole band.

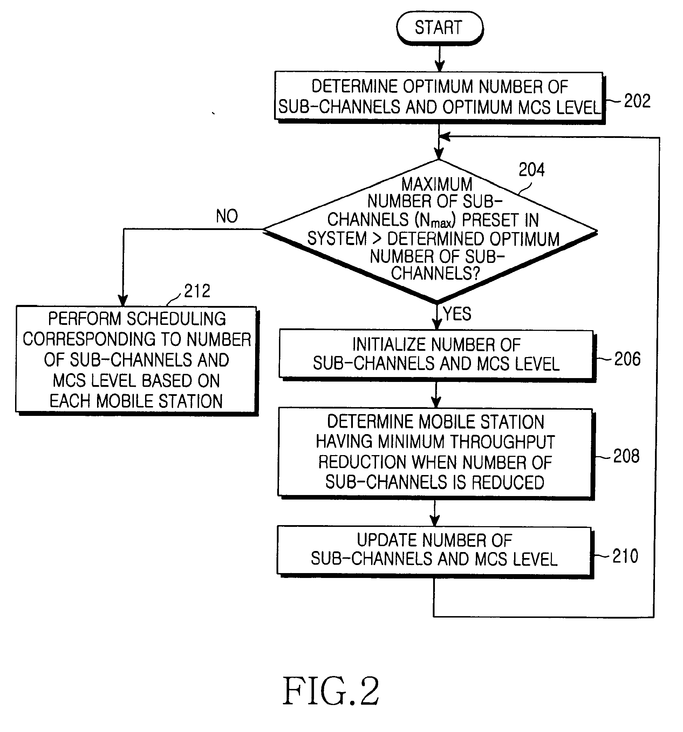

After the optimum number of sub-channels and the optimum MCS level for the maximum throughput are determined using Equation 3 according to mobile stations, the number of sub-channels allocated to all mobile stations is added to the optimum number of sub-channels. Thereafter, it is determined that the resultant value exceeds the number of the total sub-channels preset in a system. If the optimum number of sub-channels is lower than the number of the total sub-channels, each mobile station is allocated with the optimum number of sub-channels and the optimum MCS level obtained through Equation 3. However, if the optimum number of sub-channels is greater than the number of the total sub-channels, equal to or lower than the base station must reduce the optimum number of sub-channels so that the optimum number of sub-channels is the number of the total sub-channels. Herein, it should be noted that the base station must find a mobile station having the minimum throughput reduction and reduce the number of sub-channels to be allocated to the mobile station whenever the base station reduces one sub-channel. Hereinafter, a scheme for determining the optimum number of sub-channels and the optimum MCS level by reducing the number of sub-channels will be described with reference to FIG. 2.

FIG. 2 is a flowchart illustrating a procedure of determining the number of sub-channels and the MCS level according to a first embodiment of the present invention.

Referring to FIG. 2, in step 202, the base station determines the optimum number of sub-channels and the optimum MCS level for each mobile station using Equation 3 and determines if a total number of sub-channels determined for all mobile stations exceeds the maximum number of sub-channels set in the system in step 204. If the number of sub-channels exceeds the maximum number of sub-channels set in the system, the base station performs step 206. Otherwise, if the sum of the sub-channels is less than or equal to the maximum number of sub-channels set in the system, the base station performs scheduling for the mobile station using the optimum number of sub-channels and the optimum MCS level determined above, in step 212. In step 206, the base station initializes the optimum number of sub-channels and the optimum MCS level determined with respect to each mobile station so that the number of sub-channels allocated to the mobile stations is equal to or less than the number of overall sub-channels of the system. In step 208, the base station determines the mobile station having the minimum throughput reduction while reducing the number of sub-channels determined according to mobile stations by a predetermined value. Thereafter, in step 210, the base station updates the number of sub-channels and an MCS level of a corresponding mobile station, the number of sub-channels of which are reduced, and repeats step 204.

As described above, if a larger number of sub-channels are allocated to mobile stations having a superior channel state than mobile stations having an inferior channel state, then a smaller number of sub-channels is inevitably allocated to the mobile station having an inferior channel state (i.e., a mobile station located at the border of a cell). Therefore, the mobile station positioned at the border of a cell concentrates all its allocated power using fewer sub-channels, thereby improving SINR performance.

**Embodiment 2: The Effective Power Control Scheme**

Hereinafter, a scheme for effectively controlling power according to the second embodiment of the present invention will be described.

The FH-OFDMA communication system performs frequency hopping based on probable statistics capable of averaging interference of the overall frequency band. Thus, defining a scheme for effectively controlling power using the FH-OFDMA scheme characteristic of averaging the interference of overall frequency band.

In more detail, a base station of a home cell including a mobile station receives an averaged amount of interference and an SINR value information from a neighboring cell using the same frequency as the home cell. The mobile station controls its power using the received information and a link gain known to the mobile station. In other words, the mobile station is capable of not only restricting an amount of interference exerted on the neighboring cell, but also increasing the amount of transmission data because the mobile station controls its power using information including an averaged SINR value and an amount of interference of the neighboring cell. If the mobile station receives a small amount of interference from a base station of the neighboring cell, the mobile station increases its throughput by increasing the power thereof. If the mobile station receives more than a predetermined amount of interference from the base station of the neighboring cell, the mobile station minimizes an amount of interference exerted on the neighboring cell by lowering the power at the maximum within the range of power satisfying quality of service (QoS). Thus, SINR values of overall cells are averaged, and distributed power control in each cell may be achieved using information of the neighboring cell.

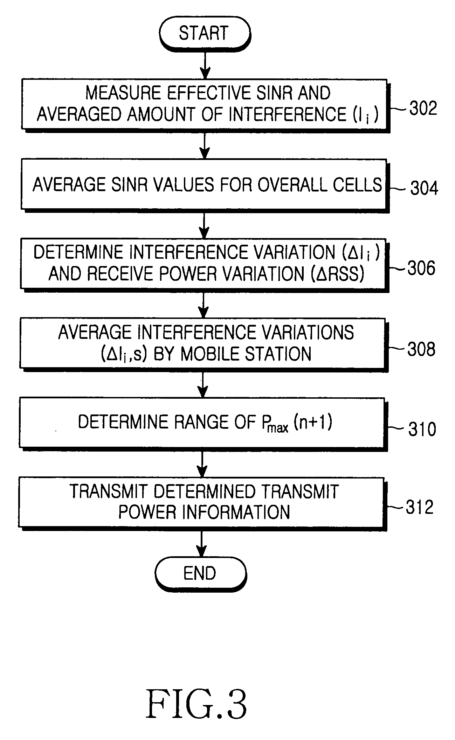

FIG. 3 is a flowchart illustrating a distributed power control procedure according to the second embodiment of the present invention.

In step 302, the base station finds an effective SINR (i.e., $SINR_i$) according to the present invention using Equation 4, measures an averaged amount of interference $I_i$ in the $i^{th}$ cell, and then performs step 304. Herein, the $I_i$ may be obtained using $\sum_{j=1}^{N} \left| r_j - s_j \right|^2$. The $r_j$ denotes a signal received at a position of the $j^{th}$ sub-carrier, and the $s_j$ denotes a pilot signal or a signal decoded at a position of the $j^{th}$ sub-carrier.

### Equation 4

$$SINR_i = \frac{\sum_{m=1}^{M} \alpha_{i,m} SINR_{i,m}}{\sum_{m=1}^{M} \alpha_{i,m}}$$

In Equation 4, the $\alpha_{i,m}$ denotes a weight value for the $m^{th}$ mobile station in the $i^{th}$ cell. The $\alpha_{i,m}$ is set to a large value for mobile stations having low SINR values and set to a small value for mobile stations having high SINR values.

The amount of interference and the effective SINR value estimated as described above are transmitted to neighboring base stations from a base station including the mobile station. In step 304, the base station calculates average SINR values for all cells using Equation 5 as shown below and thereafter performs step 306.

## Equation 5

$$Avg\_SINR = \sum_{i=1}^{N_c} SINR_i \bigg/ N_c$$

Herein, the *Avg_SINR* denotes an average SINR value of effective SINR values received from neighboring base stations. An effective receive signal power $RSS_i$ of a base station in the i$^{th}$ cell may be defined as Equation 6.

## Equation 6

$$RSS_i = I_i \cdot SINR_i$$

Herein, $I_i$ is an amount of interference in receiver side of base station in the i$^{th}$ cell. In step 306, the base station finds an interference variation $\Delta I_i$ and a receive power variation $\Delta RSS_i$ in order to equalize SINR (i.e., to achieve SINR fairness between cells) between cells (that is, in order to allow an SINR of each cell to have a value near to a value of an averaged SINR ).

The interference variation $\Delta I_i$ can be expressed as Equation 7 shown below.

## Equation 7

$$\frac{RSS_2}{I_2 + \Delta I_2} \approx \frac{RSS_3}{I_3 + \Delta I_3} \approx \cdots \approx \frac{RSS_{N_c}}{I_{N_c} + \Delta I_{N_c}} \approx Avg\_SINR$$

Herein, the $N_c$ denotes the number of whole cells. In addition, $\Delta I_i > 0$ means that the probability of the communication error is low because an SINR value of the i$^{th}$ cell is higher than the averaged SINR value. In contrast, in a case of $\Delta I_i$, being less than or equal to 0, the communication error probability is high because an SINR value of the i$^{th}$ cell is lower than the averaged SINR value.

Similarly, a variation in receive power $\Delta RSS_i$ of the home cell for SINR fairness between cells is defined as Equation 8.

## Equation 8

$$\frac{RSS_1 + \Delta RSS_1}{I_1} = Avg\_SINR$$

Herein, if a value of $\Delta RSS_i$ is greater than 0 this indicates that an increase of power is required with respect to a mobile station having a high probability of the communication error due to an SINR value of its home cell being lower than an average value of SINR values of overall cells. In contrast, $\Delta RSS_i$ is greater than 0, it indicates that a decrease of power is required with respect to the mobile station in order to minimize an amount of interference exerted on the neighboring cells due to the SINR value of its home cell being higher than the average value.

Accordingly, if transmit power of a mobile station in the home cell is controlled using the $\Delta I_i$ and the $\Delta RSS_i$, distributed power control can be achieved.

In step 308, the mobile station selects $n_c$ neighboring base stations from base stations located in neighboring cells except for its home cell according to the descending order of link gain value. Interference variations $\Delta I_i$ s corresponding to the selected $n_c$ cells are averaged using Equation 9 shown below.

### Equation 9

$$E_{i,m} \cong \frac{\sum_{l \in C_{i,m}} G_{l,i,m} \Delta I_l}{n_c} \quad \text{for each i and m.}$$

for each i and m. Herein, the $G_{l,i,m}$ denotes a link gain between the $l^{th}$ base station and the $m^{th}$ mobile station in the $l^{th}$ cell. The SINR values of neighboring cells of a cell including the mobile station may be estimated Equation 9. In other words, if a value of $E_{i,m}$ is less than 0, this indicates that the SINR values of neighboring cells of a cell including the $m^{th}$ mobile station may be lower than the average value of the SINR values of the overall cells. In this case, the mobile station may lower the maximum available power level. In contrast, if a value of $E_{i,m}$ is greater than 0, this indicates that the SINR values of the neighboring cells of the cell including the $m^{th}$ mobile station may be higher than the average value of the SINR values of the overall cells. In this case, the mobile station may lift the maximum available power level.

In step 310, the base station may determine the maximum transmit power level (Maximum Tx power level) using Equation 10 shown below.

### Equation 10

$$P_{i,m,\max}(n+1) = \begin{cases} \min\{P_{\max}, \beta_1 \cdot P_{i,m,\max}(n)\}, & \text{if } Avg\_SINR_l > \overline{SINR} \text{ and } E_{i,m} > Thr1 \text{ and } P_{i,m}(n)G_{i,i,m}/I_{i,m} < \gamma_{th1} \\ \max\{P_{\min}, \beta_2 \cdot P_{i,m,\max}(n)\}, & \text{if } Avg\_SINR_l < \overline{SINR} \text{ and } E_{i,m} < Thr2 \text{ and } P_{i,m}(n)G_{i,i,m}/I_{i,m} > \gamma_{th2} \\ P_{i,m,\max}(n), & \text{o.w.} \end{cases}$$

Herein, $I_{i,m}$ is measured interference at receiver side of the $m^{th}$ mobile station of the $l^{th}$ cell. As described above, $E_{i,m}$ indicates the interference state of the neighboring cells of the $m^{th}$ mobile station in the $l^{th}$ cell and is interpreted as a weighted link gain from the $m^{th}$ mobile station in the $l^{th}$ cell to adjacent interfering cells. Thr1 is larger than or equal to zero and Thr2 is smaller than or equal to zero. As the absolute value of Thr1 and Thr2 increases, cell-edge users are selected for power control. $Y_{th1}$ and $Y_{th2}$ are SINR thresholds, which determine the mobile users who need the power control.

In the distributed power control scheme according to the present invention, a home cell (e.g., base station $l$) having an SINR value higher than an average SINR value lowers the transmit power of a specific mobile station in the home cell so that the SINR value of the home cell can approximate the average SINR value. In other words, the base station I lowers the transmit power of a specific mobile station which is interfering with the $i^{th}$ cell from among mobile stations in the home cell by taking the $i^{th}$ cell having a characteristic of $\Delta I_i < 0$ into consideration. Thus, the SINR value of the home cell is lowered and interference exerted on neighboring cells is decreased.

In Equation 10, the $\beta_1$ and the $\beta_2$ are variables determining the increment or the decrement of a power level and have a range of $0 < \beta_2 < 1 < \beta_1$. In addition, if an average SINR value of the home cell is lower than the average SINR value of the overall cells, a set of mobile stations having a characteristic of $E_{i,m} > Thr1$ is defined, and transmit power values of mobile stations having a transmit power value that is lower than the target SINR value (i.e., $Y_{th1}$) are increased. In contrast, if an average SINR value of the home cell is higher than the average SINR value of the overall cells, a set of mobile stations having a characteristic of $E_{i,m} < Thr1$ is defined, and transmit power values of mobile stations having a transmit power value that is higher than the target SINR value (i.e., $Y_{th2}$), are decreased.

The base station determines the number of sub-channels and an MCS level within the range of power determined using Equation 10 and determines the transmit power of the next OFDM symbol frame duration (i.e., an n+1 duration) using Equation 11.

### Equation 11

$$P_{i,m}(n+1) = \frac{\gamma(t_{i,m})I_i N_{i,m,\max}}{G_{i,i,m}}$$

## Embodiment 3: Integration Scheme for the First and Second Embodiments

The third embodiment of the present invention is obtained by integrating the scheme for allocating sub-channels according to the first embodiment of the present invention with the scheme for effectively controlling power.

In other words, according to the third embodiment of the present invention, the maximum available transmit power level, $P_{i,m,max}$, set according to the system realization is determined, and the number of sub-channels to be allocated to each mobile station is determined based on the $P_{i,m,max}$. Thereafter, it is possible to control an amount of interference exerted on neighboring cells by adaptively controlling transmit power levels of mobile stations in the home cell according to SINR values of the neighboring cells. Herein, it is assumed that mobile stations belonging to one cell are allocated with the same number of sub-channels.

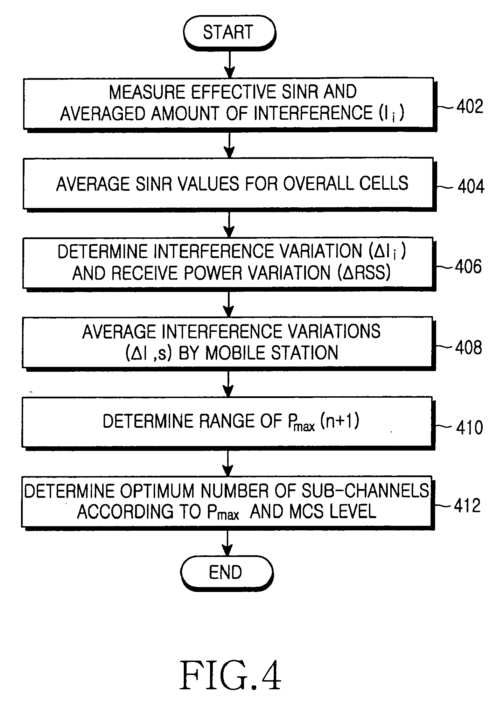

FIG. 4 is a flowchart illustrating a procedure of integrating the scheme for allocating sub-channels with the scheme for controlling power according to the third embodiment of the present invention.

Steps 402 to 410 perform the same operations as steps 302 to 310 shown in FIG. 3. Accordingly, for the sake of clarity, a description of steps 402-410 will be omitted. In step 412, the base station determines the optimum number of sub-channels and the optimum MCS level satisfying Equation 2 based on the determined maximum transmit power level. Then, the base station transmits the optimum number of sub-channels and the optimum MCS level to a corresponding mobile station.

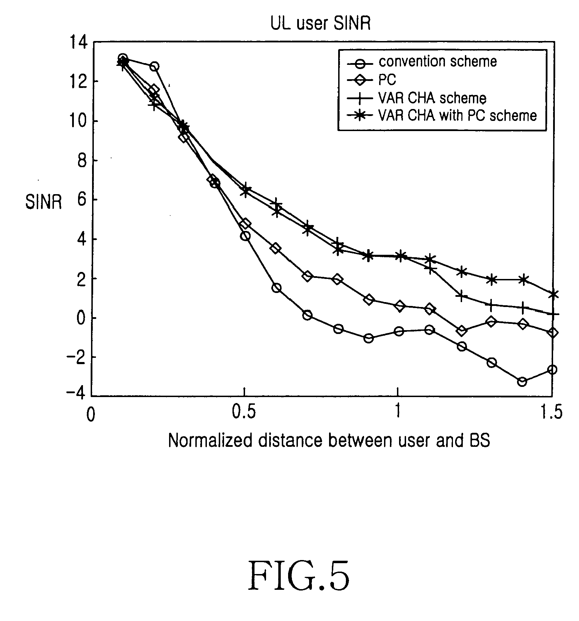

FIG. 5 is a graph illustrating results of simulations according to the embodiments of the present invention.

Prior to the description of FIG. 5, the reader is directed to Table 1 which illustrates a performance comparison result of the conventional scheme, which enhances throughput by allocating mobile stations positioned at the center of a cell with high power and a high transmission rate and allocating mobile stations positioned at the border of the cell with low power and a low transmission rate and the first embodiment, the second embodiment and the third embodiment of the present invention.

### Table 1

| | Avg_thr (Mbps) | Outage | MCS level1 | MCS Level2 | MCS level3 | MCS level4 | MCS level5 | MCS level6 | MCS level7 | MCS level8 |
|---|---|---|---|---|---|---|---|---|---|---|
| Conv | 1.496 | 30.70 | 6.17 | 11.77 | 6.32 | 3.90 | 5.95 | 5.15 | 8.90 | 21.13 |
| PC | 1.435 | 17.82 | 11.89 | 22.01 | 8.18 | 4.22 | 5.28 | 4.71 | 11.31 | 14.58 |
| VAR_CHA | 1.877 | 14.24 | 5.57 | 10.05 | 7.06 | 5.41 | 9.40 | 10.20 | 21.30 | 16.76 |
| VAR_CHA With PC | 1.883 | 10.36 | 4.60 | 12.20 | 10.81 | 6.44 | 11.18 | 10.16 | 16.63 | 17.62 |

In Table 1, Conv indicates the performance of the conventional scheme, PC indicates the performance of the scheme for controlling power according to the second embodiment of the present, VAR_CHA indicates the performance of the scheme for allocating sub-channels and an MCS level according to the first embodiment of the present invention and VAR_CHA with PC indicates the performance according to the third embodiment of the present invention. With reference to Table 1, it is seen that the integration scheme according to the third embodiment of the present invention has the highest average throughput (Avg_thr). The average throughput is obtained by the system level simulation. The selection of the appropriate MCS (modulation and coding sets) is performed at the receiver according to the observed channel condition (ex. measured SINR). Herein, we use 8 modulation and coding sets as shown below.

Table 2

| MCS level | 1 | 2 | 3 | 4 | 5 | 6 | 7 | 8 |
|---|---|---|---|---|---|---|---|---|
| MCS | QPSK 1/12 | QPSK 1/6 | QPSK 1/3 | QPSK 1/2 | QPSK 2/3 | 16QAM 1/2 | 16QAM 2/3 | 16QAM 5/6 |
| SINR threshold | -1.8 | -0.3 | 2.6 | 4.2 | 5,2 | 6.8 | 8.3 | 11.3 |

Additionally, it is readily observed that the embodiments of the present invention have a low communication error probability on the border of a cell in comparison with the conventional scheme. That is observed by the term of outage. The outage is occurred when the wireless channel is so bad that cannot support the MCS1 that is minimum MCS level.

Referring to FIG. 5, the conditions of the simulation are as follows.

- Simulation tool : MATLAB
- Cell structure : 28 Multi-cell, wrap around method
- Cell radius : 1 km
- Antenna: Omni-directional antenna
- Shadowing STD : 10
- 100 % system load
- Thr1 = Thr2 = 0
- Increment/decrement of power is set to 1.5 dB

As described above, according to the present invention, it is possible to improve the performance of the overall system by determining the number of sub-channels and an MCS level capable of maximizing the throughput while minimizing interference exerted on neighboring cells by mobile stations positioned at the border of a cell having a cellular structure. In addition, it is possible to properly allocate an amount of power which has been allocated to a specific mobile station by adaptively changing the transmit power level of the mobile station.

While the invention has been shown and described with reference to certain preferred embodiments thereof, it will be understood by those skilled in the art that various changes in form and details may be made therein without departing from the scope of the invention. Consequently, the scope of the invention should not be limited to the embodiments, but should be defined by the appended claims.

**Claims**

1. A method for uplink scheduling in a communication system having a cellular structure hopping between sub-channels according to predetermined conditions whenever a signal is transmitted, the communication system dividing a whole frequency band into a plurality of sub-carrier bands and including the sub-channels which are sets of the sub-carrier bands, the method comprising the steps of:

    determining a number of sub-channels to be allocated to a mobile station such that throughput of the mobile station is maximized based on a first condition in which a mobile station having a superior channel state is allocated with a greater number of sub-channels than the number of sub-channels allocated to a mobile station having an inferior channel state; and
    determining a modulation and coding scheme level according to a signal-to-interference and noise ratio, SINR, of a downlink channel reported by the mobile station based on a second condition capable of improving a uplink/downlink channel state of the mobile station having an inferior channel state.

2. The method as claimed in claim 1, wherein the number of the sub-channels allocated to each of the mobile stations is lower than or equal to a total number of sub-channels preset in a system.

3. The method as claimed in claim 2, further comprising the steps of:

    temporarily decreasing the number of the sub-channels allocated to each mobile station, if a sum of the numbers of the sub-channels determined according to the mobile stations is greater than the the total numbers of sub-channels;

calculating throughput of each mobile station according to the decreased number of the sub-channels;

selecting a mobile station having minimum throughput reduction; and

decreasing a number of sub-channels to be allocated to the mobile station such that the sum of the numbers of the sub-channels determined according to the mobile stations is less than or equal to the total number of sub-channels.

4. The method as claimed in one of claims 1 to 3, wherein the modulation and coding scheme level and the number of the sub-channels allocated to each mobile station are determined based on the first condition and the second condition are defined by,

$$\{t_{i,m}^{*}, N_{i,m}^{*}\} = \arg\max_{N_{i,m}, t_{i,m}} N_{i,m} b(SINR_{i,m}) \; s.t. \; P_{i,m} = \frac{\gamma(t_{i,m}) I_i N_{i,m}}{G_{l,i,m}} \le P_{\max} \quad,$$

wherein $N_{i,m}^{*}$ denotes an optimum number of sub-channels of an $m^{th}$ mobile station in an $i^{th}$ cell, the $t_{i,m}^{*}$ denotes a modulation and coding scheme of the $m^{th}$ mobile station in the $i^{th}$ cell, the $N_{i,m}$ denotes a number of sub-channels allocable to the $m^{th}$ mobile station in the $i^{th}$ cell, $b(SINR_{i,m})$ denotes a number of bits-per-symbol corresponding to an SINR of the $m^{th}$ mobile station in the $i^{th}$ cell, $P_{i,m}$ denotes an amount of power used by the $m^{th}$ mobile station in the $i^{th}$ cell, $P_{\max}$ denotes an amount of maximum transmit power for each mobile station, $G_{l,i,m}$ denotes a link gain between an $l^{th}$ base station and the $m^{th}$ mobile station in the $i^{th}$ cell, $\gamma(t_{i,m})$ denotes a threshold of a signal-to-interference and noise ratio for obtaining the modulation and scheme level, $t_{i,m}$ and $I_i$ each denote an amount of interference received in the $l^{th}$ cell.

5. The method as claimed in claim 4, wherein an amount of power to be allocated to a single sub-channel of the mobile station is less than or equal to a total amount of power of a cell divided by the total number of sub-channels in the cell.

6. A method for uplink scheduling in a communication system having a cellular structure using sub-channels to transmit signals according to predetermined conditions, the communication system dividing a whole frequency band into a plurality of sub-carrier bands and including the sub-channels which are sets of the sub-carrier bands, the method comprising the steps of:

estimating an amount of signal interference exerted on a mobile station located in a predetermined cell by neighboring cells;

estimating an average amount of signal interference by dividing a total amount of signal interference of all mobile stations existing in the predetermined cell by the number of the neighboring cells;

adding a first offset value to the amount of signal interference experienced by the mobile station due to the neighboring cells and averaging signal-to-interference and noise ratio, SINR, values of overall cells such that the averaged SINR value approximates the estimated amount of signal interference; and

determining a transmit power of the mobile station corresponding to the averaged SINR value.

7. The method as claimed in claim 6, wherein the first offset value is used to increment or decrement a value of the amount of signal interference.

8. The method as claimed in claim 6 or 7, further comprising the steps of:

estimating a receive signal power allocated to the mobile station; and

adding a total of all signal powers received by the neighboring cells by the mobile station to a second offset value and averaging SINR values of overall cells such that the averaged SINR value approximates the estimated average amount of signal interference.

9. The method as claimed in claim 8, wherein the second offset value is used to increment or decrement value of the estimated receive signal power.

10. The method as claimed in one of claims 6 to 9, wherein the base station determines a maximum transmit power P of each mobile station for an N$^{th}$ frame using the following equation,

$$P_{i,m,\max}(n+1)=\begin{cases} \min\{P_{\max}, \beta_1 \cdot P_{i,m,\max}(n)\} & \text{if } Avg\_SINR > SINR_t \text{ and } E_{i,m} > Thr1 \text{ and } P_{i,m}(n)G_{i,i,m}/I_{i,m} < \gamma_{th1} \\ \max\{P_{\min}, \beta_2 \cdot P_{i,m,\max}(n)\} & \text{if } Avg\_SINR < SINR_t \text{ and } E_{i,m} < Thr2 \text{ and } P_{i,m}(n)G_{i,i,m}/I_{i,m} > \gamma_{th2} \\ P_{i,m,\max}(n), & \text{o.w.} \end{cases}$$

wherein the $P_{i,m,\max}$ (n+1) denotes maximum transmit power which can be transmitted by an m$^{th}$ mobile station of an i$^{th}$ cell in a next frame duration (i.e., an n+1 frame), $\beta_1$ and $\beta_2$ denote variables determining a power increment or a power decrement, $E_{i,m}$ denotes an average value of variations of interference exerted on the neighboring cells by the mobile station, $Thr1$ and $Thr2$ denote predetermined reference values, the $G_{i,i,m}$ denotes a line gain between an l$^{th}$ neighboring cell and the m$^{th}$ mobile station of the l$^{th}$ cell and $\gamma_{th1}$ and $\gamma_{th2}$ denote reference values for a target throughput.

11. A method for uplink scheduling in a communication system having a cellular structure using sub-channels to transmit signals according to predetermined conditions, the communication system dividing a whole frequency band into a plurality of sub-carrier bands and including the sub-channels which are sets of the sub-carrier bands, the method comprising the steps of:

estimating an amount of signal interference exerted on a mobile station existing in a predetermined cell by neighboring cells;
estimating an average amount of signal interference by dividing a total amount of signal interference of all mobile stations existing in the predetermined cell by the number of the neighboring cells;
adding a first offset value to the amount of signal interference experienced by the mobile station due to the neighboring cells and averaging signal-to-interference and noise ratio, SINR, values of overall cells such that the averaged SINR value approximates the estimated amount of signal interference;
determining a transmission power of the mobile station corresponding to the averaged SINR value;
determining a number of sub-channels to be allocated to a mobile station such that throughput of the mobile station is maximized based on a condition in which a mobile station having a superior channel state is allocated with a greater number of sub-channels than the number of sub-channels allocated to a mobile station having an inferior channel state according to the determined transmit power of the mobile station; and
determining a modulation and coding scheme level according to a SINR of the mobile station based on a predetermined condition so as to improve a channel state of the mobile station having a channel state which is requires improvement.

FIG.1

START

DETERMINE OPTIMUM NUMBER OF
SUB-CHANNELS AND OPTIMUM MCS LEVEL — 202

MAXIMUM
NUMBER OF SUB-
CHANNELS ($N_{max}$) PRESET IN
SYSTEM > DETERMINED OPTIMUM
NUMBER OF SUB-
CHANNELS? — 204

NO

PERFORM SCHEDULING
CORRESPONDING TO NUMBER
OF SUB-CHANNELS AND
MCS LEVEL BASED ON
EACH MOBILE STATION — 212

YES

INITIALIZE NUMBER OF
SUB-CHANNELS AND MCS LEVEL — 206

DETERMINE MOBILE STATION
HAVING MINIMUM THROUGHPUT
REDUCTION WHEN NUMBER OF
SUB-CHANNELS IS REDUCED — 208

UPDATE NUMBER OF
SUB-CHANNELS AND MCS LEVEL — 210

FIG.2

START

| MEASURE EFFECTIVE SINR AND AVERAGED AMOUNT OF INTERFERENCE ($I_i$) | ~302 |

| AVERAGE SINR VALUES FOR OVERALL CELLS | ~304 |

| DETERMINE INTERFERENCE VARIATION ($\Delta I_i$) AND RECEIVE POWER VARIATION ($\Delta RSS$) | ~306 |

| AVERAGE INTERFERENCE VARIATIONS ($\Delta I_i$,s) BY MOBILE STATION | ~308 |

| DETERMINE RANGE OF $P_{max}$ (n+1) | ~310 |

| TRANSMIT DETERMINED TRANSMIT POWER INFORMATION | ~312 |

END

# FIG.3

START

MEASURE EFFECTIVE SINR AND
AVERAGED AMOUNT OF INTERFERENCE ($I_i$) — 402

AVERAGE SINR VALUES FOR OVERALL CELLS — 404

DETERMINE INTERFERENCE VARIATION ($\Delta I_i$)
AND RECEIVE POWER VARIATION ($\Delta RSS$) — 406

AVERAGE INTERFERENCE VARIATIONS
($\Delta I$ ,s) BY MOBILE STATION — 408

DETERMINE RANGE OF $P_{max}$ (n+1) — 410

DETERMINE OPTIMUM NUMBER OF SUB-CHANNELS
ACCORDING TO $P_{max}$ AND MCS LEVEL — 412

END

# FIG.4

FIG.5